# EUROPEAN PATENT APPLICATION

(11) **EP 1 947 843 A1**
(43) Date of publication of application: **23.07.2008**
(21) Application number: 06822623.2
(22) Date of filing: 31.10.2006
(51) Int. Cl.: H04N 5/60, H04N 5/44

(54) **AUDIOVISUAL SYSTEM**

(30) Priority: 31.10.2005 JP 2005316144; 31.10.2005 JP 2005317249
(71) Applicant: MATSUSHITA ELECTRIC INDUSTRIAL CO., LTD., Osaka 571-8501 (JP)
(72) Inventor: SAKAMOTO, Akifumi, c/o Matsushita El. Ind. Co., Ltd., IPROC, Chuo-ku, Osaka-shi, Osaka 540-6207 (JP); MIZOGUCHI, Masahiko, c/o Matsushita El. Ind. Co., Ltd., IPROC, Chuo-ku, Osaka-shi, Osaka 540-6207 (JP); MURAKAMI, Toshiki, c/o Matsushita El. Ind. Co., Ltd., IPROC, Chuo-ku, Osaka-shi, Osaka 540-6207 (JP); MITANI, Akihiro, c/o Matsushita El. Ind. Co., Ltd., IPROC, Chuo-ku, Osaka-shi, Osaka 540-6207 (JP); OTSUKA, Koichi, c/o Matsushita El. Ind. Co., Ltd., IPROC, Chuo-ku, Osaka-shi, Osaka 540-6207 (JP); ITOGA, Mutsumi, c/o Matsushita El. Ind. Co., Ltd., IPROC, Chuo-ku, Osaka-shi, Osaka 540-6207 (JP)
(74) Representative: TBK-Patent
(86) International application number: PCT/JP2006/321694
(87) International publication number: WO 2007/052625

(57) **Abstract**

An audiovisual system is provided in which the operability of selection by a user between internal speakers of a TV and external speakers connected to an audio amplifier has been improved, thus reducing the burdensomeness of operation. When an audio amplifier (100A) is powered on, a control part (106A) of the audio amplifier (100A) judges that use of external speakers (105) connected to the audio amplifier (100A) has been selected, and transmits a control signal for putting internal speakers (205) of a TV (200A) in a muted state to a control part (206A) of the TV (200A) via a communication means (300). Conversely, when the audio amplifier (100A) is powered off, the control part (106A) judges that use of the internal speakers (205) of the TV (200A) has been selected, and transmits a control signal for canceling the muted state of the internal speakers (205) to the control part (206A) of the TV (200A) via the communication means (300).

## Description

### Technical Field

The present invention relates to an audiovisual system provided with a video/audio reproduction apparatus such as a television receiver having internal speakers and a sound reproduction apparatus such as an audio amplifier to which external speakers are connected, and further relates to an audiovisual system provided with an AV device such as a DVD player, a DVD recorder, or the like.

### Background Art

Audiovisual systems are becoming widespread in which a television receiver (referred to below to as a "TV") is connected to an audio amplifier to realize the feeling of attending a movie theater at home, commonly referred to as home theater systems. A user selects either external speakers connected to the audio amplifier of the home theater system or internal speakers of the TV, and thus can enjoy audio output from the selected speakers.

For example, when the audio amplifier is used to enjoy powerful sound, the user first turns down the volume of the internal speakers by operating a remote control of the TV. Next, the user uses a remote control of the audio amplifier to power on the audio amplifier, and adjust the volume of the external speakers.

Afterward, in conditions in which it is not permitted to emit sound at a high volume, such as at night, the user is required to switch to audio from the internal speakers, not from the external speakers. In this case, the user is required to perform an operation of powering off the audio amplifier or turning down the volume of the external speakers, and also adjusting the volume of the internal speakers of the TV.

In the above audiovisual system, when using the external speakers of the audio amplifier, or when switching from the external speakers to the internal speakers, depending on the speakers that are used, it is necessary for the user to individually, manually adjust the volume of the respective speakers (including operating the power supply). This sort of individual manual operation is troublesome and burdensome to the user.

Technology has been proposed that eliminates the burdensomeness of individual operation by the user for each of the speakers before and after switching (Patent Document 1, Patent Document 2). Specifically, a TV and audio amplifier is disclosed in which switching audio output between internal speakers and external speakers can be performed simply. More specifically, a configuration is adopted in which the user uses a switch of a remote control or the like to select and switch to, and thus use, either the internal speakers or the external speakers.
Patent Document 1: Japanese Laid-Open Patent Publication No. H05-153520A
Patent Document 2: Japanese Laid-Open Patent Publication No. H10-79896A

### Disclosure of the Invention

### Problem To be Solved by the Invention

In the above method in which the speakers that output audio can be switched using a remote control, operability of selection of the speakers used is improved. However, the burdensomeness of power supply operation of the amplifier when it is not used, operation to turn down the volume of speakers, and the like are not improved.

Also, while audio of the TV is being reproduced with the external speakers of the audio amplifier, a problem may occur on the audio amplifier side so that audio is not output. Conceivable causes of such a problem include, for example, detachment of a cable that links the TV and the audio amplifier, powering off the audio amplifier, or an internal error in the audio amplifier. In this case, the user's demands to listen to music are not satisfied.

The present invention was made in view of the problems in conventional audiovisual systems described above, and it is an object of the invention to provide an audiovisual system in which the operability of selection of individual speakers required of a user, including power supply operation and volume adjustment when using external speakers, is improved, thus reducing the burdensomeness of operation.

### Means for Solving the Problem

In order to achieve the above object, an audiovisual system according to the invention is an audiovisual system provided with a video/audio reproduction apparatus that reproduces video and audio, a sound reproduction apparatus that outputs audio from external speakers, and a communication means connected between the video/audio reproduction apparatus and the sound reproduction apparatus, in which an audio signal that has been selected from a plurality of audio signals is output to either internal speakers of the video/audio reproduction apparatus or external speakers of the sound reproduction apparatus, and in which
(a) the video/audio reproduction apparatus is provided with a first audio output control part that controls output to the internal speakers (205) using the selected audio signal as input, and
   a first control part that controls at least the first audio output control part, and
(b) the sound reproduction apparatus is provided with a second audio output control part that controls output to the external speakers using the selected audio signal as input, and
   a second control part that controls at least the second audio output control part,
(c) in which the first and second control parts are capable of communicating with each other via the communication means, and the first control part controls the first audio output control part based on information obtained via the communication means.

It is preferable that the second control part of the audiovisual system according to the invention sends a first control signal to the first control part via the communication means, based on a power on or off state of the sound reproduction apparatus, and the first control part controls the first audio output control part according to the received first control signal.
Also, it is preferable that the first control part controls the first audio output control part such that, when a signal indicating that power is on is received as the first control signal, the internal speakers are in a muted state, and when a signal indicating that power is off is received, the muted state of the internal speakers is cancelled.

Also, a configuration may be adopted in which the first control part sends a second control signal to the second control part that instructs powering the sound reproduction apparatus on or off, and the second control part, based on the received second control signal, controls power of the sound reproduction apparatus on or off and sends the first control signal based on the power on or off state to the first control part.

Also, in the audiovisual system of the invention, a configuration may be adopted in which from a third control part provided in a third apparatus having a function to reproduce video signals and audio signals, a third control signal that instructs powering the sound reproduction apparatus on or off is sent to the second control part, and the second control part, based on the received third control signal, controls power of the sound reproduction apparatus on or off and sends the first control signal based on the power on or off state to the first control part.

It is preferable that the first control part of the audiovisual system according to the invention monitors the state of communication with the second control part, and controls the first audio output control part such that the internal speakers are in a muted state when communication is possible, and controls the first audio output control part such that the muted state of the internal speakers is cancelled when communication is not possible.

Also, it is preferable that the audiovisual system according to the invention is further provided with an audio input selection part that selects one audio signal from a plurality of audio signals. A configuration may be adopted in which the audio input selection part is provided with a first audio input selection part built into the video/audio reproduction apparatus, and a second audio input selection part built into the sound reproduction apparatus.

Also, it is preferable that the audiovisual system according to the invention is further provided with a first audio processing part that performs necessary processing on an audio signal that has been output from the first audio input selection part. Also, it is preferable that the audiovisual system according to the invention is further provided with a second audio processing part that performs necessary processing on an audio signal that has been output from the second audio input selection part.

Also, a video/audio reproduction apparatus according to the invention that achieves the above object is a video/audio reproduction apparatus that, along with a sound reproduction apparatus that outputs audio from external speakers, constitutes an audiovisual system, and outputs an audio signal selected from a plurality of audio signals to either external speakers of the sound reproduction apparatus or internal speakers of the video/audio reproduction apparatus, the video/audio reproduction apparatus being provided with:
an audio output control part that controls output to the internal speakers using the selected audio signal as input, and
a control part that is capable of bilaterally communicating with the sound reproduction apparatus via a communication means, and controls at least the audio output control part,
in which the control part controls the audio output control part based on information obtained via the communication means.

Also, a sound reproduction apparatus according to the invention that achieves the above object is a sound reproduction apparatus that, along with a video/audio reproduction apparatus that reproduces video and audio, constitutes an audiovisual system, and outputs an audio signal selected from a plurality of audio signals to either internal speakers of the video/audio reproduction apparatus or external speakers connected to the sound reproduction apparatus, the sound reproduction apparatus being provided with:
an audio output control part that controls audio output of the external speakers using the selected audio signal as input, and
a control part that is capable of bilaterally communicating with the video/audio reproduction apparatus via a communication means, and controls at least the audio output control part,
in which the control part sends a first control signal based on a power on or off state to the control part of the video/audio reproduction apparatus via the communication means.

### Effect of the Invention

According to the invention, in an audiovisual system that outputs audio from either internal speakers or external speakers, when outputting audio, it is possible to improve selectability of the internal speakers and the external speakers, and to improve the operability of selection by a user, thus reducing the burdensomeness of operation.

### Brief Description of the Drawings

FIG. 1 is a block diagram that shows the configuration of an audiovisual system according to a first embodiment of the invention.
FIG. 2 illustrates a method for controlling internal speakers when audio of a television broadcast is reproduced in the audiovisual system according to the first embodiment shown in FIG. 1.
FIG. 3 is a flowchart that shows operation of an audio amplifier-side in the internal speaker control method of the audiovisual system illustrated with FIG. 2.
FIG. 4 is a flowchart that shows operation of a TV-side in the internal speaker control method of the audiovisual system illustrated with FIG. 2.
FIG. 5 illustrates a method for controlling internal speakers when a DVD is played in the audiovisual system according to the first embodiment shown in FIG. 1.
FIG. 6 is a block diagram that shows the configuration of an audiovisual system according to a second embodiment of the invention.
FIG. 7 is a flowchart that shows an internal speaker control operation of an audiovisual system according to a third embodiment of the invention.

### Best Mode for Carrying Out the Invention

Before specifically describing embodiments of the invention with reference to the drawings, principles of operation of an audiovisual system according to the invention will first be described. As stated above, it is an object of the invention to improve the operability of selection of speakers used from among internal speakers of a conventional audiovisual reproduction apparatus and external speakers connected to an audio amplifier, and to improve the operability needed for power supply operation of the audio amplifier and for volume adjustment, thus reducing the burdensomeness of operation.

In order to achieve this object, in the invention, when a TV having internal speakers used to configure an audiovisual system is in an on state, when a user has powered on or powered off a power supply of an audio amplifier to which external speakers are connected, either the internal speakers or the external speakers are automatically selected. The selected speakers are controlled so as to output audio, and the speakers that are not selected are controlled so as to not output audio (muted). That is, audio is only output from the internal speakers or the external speakers.

### First Embodiment

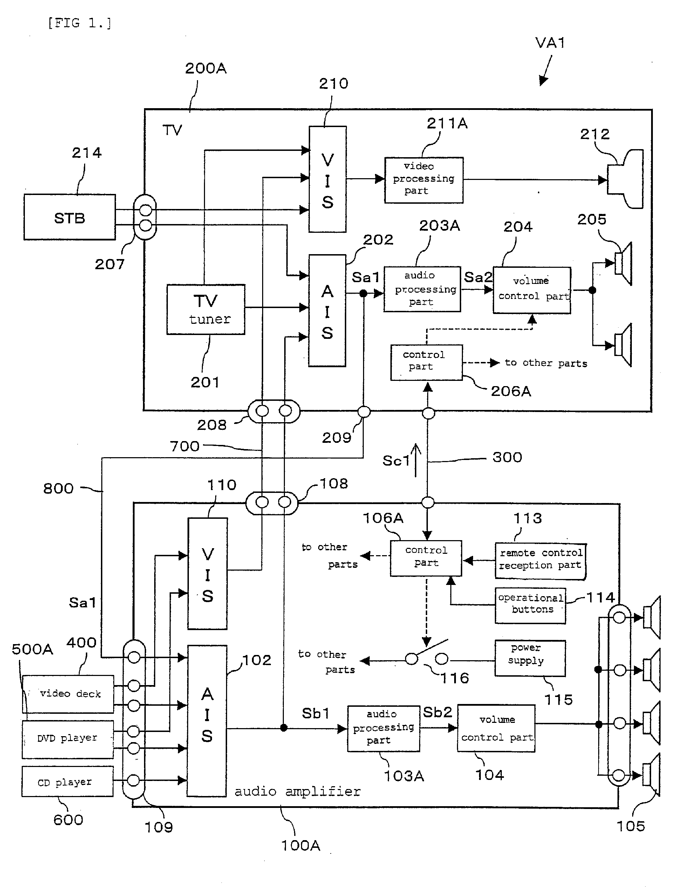

Below, an audiovisual system according to a first embodiment of the invention will be described with reference to FIGS. 1, 2, 3, 4, and 5. FIG. 1 shows the configuration of the audiovisual system. An audiovisual system VA1 includes an audio amplifier 100A and a TV 200A. The audio amplifier 100A is a sound reproduction apparatus and the TV 200A is a video/audio reproduction apparatus.

The TV 200A includes a TV tuner 201, an audio input selection part (referred to below as an "AIS") 202, an audio processing part 203A, an audio control part 204, internal speakers 205, a control part 206A, a video input selection part (referred to below as a "VIS") 210, a video processing part 211A, and a display 212. Also, a set top box (referred to below as an "STB") 214 that is an external device and receives a satellite broadcast or CATV signal is connected to an input terminal 209. Further, an input terminal 208 is connected to an output terminal 108 of the audio amplifier 100A via a cord 700 that is video signal and audio signal transmission means.

The audio amplifier 100A includes an AIS 102, an audio processing part 103A, an audio control part 104, a control part 106A, a VIS 110, a remote control receiver part 113, operational buttons 114, and a power supply 115. Also, a video deck 400, a DVD player 500A, and a CD player 600, which are external devices, are connected to a terminal 109. The control part 106A is, like the control part 206A, preferably configured with a microcomputer. Multi-channel speakers 105 serving as external speakers are connected to the audio amplifier 100A. Note that for the sake of convenience of description, the multi-channel speakers 105 may also be referred to as external speakers 105.

When the power supply of the TV 200A having the internal speakers 205 is in a powered on state, first, whether or not it is possible to output audio from the internal speakers 205 of the TV 200A is determined based on the on/off state of the power supply of the audio amplifier 100A. That is, a control signal (a command) is generated and sent to the TV 200A based on the on/off state of the power supply of the audio amplifier 100A. Based on this control signal, the TV 200A determines whether or not it is possible to output audio from the internal speakers 205, and executes necessary audio processing according to this determination.

The act of the user powering on the audio amplifier 100A is an act of the user making it possible to output audio from the external speakers (multi-channel speakers) 105 that are connected to the audio amplifier 100A. That is, in the invention, in which audio output is made possible only from either the internal speakers 205 or from the external speakers 105, the act of powering on the audio amplifier 100A can be considered to be a willful expression of the user desiring to listen to audio from the external speakers.

Based on this understanding, when the power supply of the audio amplifier 100A has been powered on, a determination is made to not output audio from the internal speakers 205 of the TV 200A. Accordingly, audio output from the internal speakers 205 is prohibited or processing for muting that audio output is executed. Also, audio output from the external speakers 105 is automatically made possible by powering on the audio amplifier 100A, so particular processing is not necessary.

Below, before describing the processing for the internal speakers 205 according to the invention, the basic operation of video/audio reproduction by the TV 200A and the audio amplifier 100A will be specifically described.

In the TV 200A, based on control of the control part 206A, the AIS 202 selects one audio signal from audio signals that are output from the TV tuner 201 built into the TV, the STB 214, and the output terminal 108 of the audio amplifier 100A. Instructions to the control part 206A are performed by a user operation using a remote control or the like, as described below. The audio processing part 203A performs processing necessary for an audio signal Sa1 that has been selected by the AIS 202.

The volume control part 204 performs processing for an audio signal Sa2 that has been output from the audio processing part 203A, such that the audio that is output from the internal speakers 205 is at a volume designated by the user. This volume controlled by the volume control part 204 includes a muted level that is a "muted state" in which audio from the internal speakers 205 is not actually output. The audio signal Sa1 that has been output from the AIS 202 is transmitted also from the terminal 209 to the input terminal 109 of the audio amplifier 100A via the cord 800.

Based on control of the control part 206A, the VIS 210 selectively outputs one video signal from video signals output from the TV tuner 201, the STB 214, and the output terminal 108 of the audio amplifier 100A. Control of the above selection of a video signal by the AIS 202 and selection of a video signal by the VIS 210, by the control part 206A, is executed based on instructions that the user gives to the TV 200A using a means (not shown) such as a remote control.

The video processing part 211A generates a video signal obtained by performing processing on the video signal that has been output from the VIS 210 such that the video signal can be displayed by the display 212. The video signal is input from the video processing part 211A to the display 212. The display 212 displays video based on the input video signal.

The control part 206A is preferably configured with a microcomputer. The control part 206A is connected to each constituent element such as the AIS 202 and the volume control part 204, as indicated by the arrow of the broken lines (partially omitted), and reciprocates various signals to control the operation of each constituent element. Here, the control part 206A may be divided into a plurality of parts corresponding to operational control of each constituent element.

The control part 206A is connected to the control part 106A of the audio amplifier 100A by a communication means 300. The control part 206A receives a control signal Sc1 from the control part 106A via the communication means 300. The control signal Sc1 is generated by the control part 106A as a command that instructs the TV 200A to perform predetermined processing, according to a user instruction or the state of the audio amplifier 100A, and this will be described in detail later.

The control part 206A analyzes the received control signal Sc1, and thus recognizes the contents of the command (instruction) of the control signal Sc1. According to the recognized command, operation of each constituent element of the TV 200A is controlled to perform predetermined processing.

Next is a description of operation by the audio amplifier 100A. As indicated by the broken lines (partially omitted) in FIG. 1, the control part 106A is connected to each constituent element such as the AIS 102 and the volume control part 104, and reciprocates various signals to control the operation of each constituent element. Also, the control part 106A analyzes signals from the operational buttons 114, or remote control signals input from the remote control receiver part 113, and controls electrical power supplied to each part from the power supply 115 on/off with a power supply switch 116. Here, the control part 106A, same as the control part 206A, may be divided into a plurality of parts corresponding to operational control of each constituent element.

Based on control of the control part 106A, the AIS 102 selectively outputs one audio signal from audio signals that have been output from the video deck 400, the DVD player 500A, the CD player 600, and the TV 200A. The audio processing part 103A performs predetermined audio processing on the audio signal Sb1 that has been output from the AIS 102 with a digital surround decoder to generate an audio signal Sb2.

The volume control part 104 performs processing on the audio signal Sb2 such that the audio that is output from the external speakers 105 is at a volume designated by the user, and outputs the signal to the external speakers 105.

Based on control of the control part 106A, the VIS 110 selectively outputs one video signal from video signals that have been output from the video deck 400 and the DVD player 500A. The video signal that has been output from the VIS 110 is transmitted from the output terminal 108 to the input terminal 208 of the TV 200A. Note that the signal source of the video signal selected by the VIS 110 and the audio signal selected by the AIS 102 is the same. That is, the same signal source is either the video deck 400 or the DVD player 500A that has the video signal and the audio signal.

The control part 206A of the TV 200A and the control part 106A of the audio amplifier 100A may be configured so as to be capable of sending/receiving commands compliant with Consumer Electronics Control (CEC), which is an optional specification of the HDMI (High Definition Multimedia Interface) specification described later, to/from each other via the communication means 300.

A constant electrical power is always supplied to the control part 106A of the audio amplifier 100A and the control part 206A of the TV 200A, even when the power supply switch 116 (TV 200A-side not shown) is in an off state. This is so that control signals can be received even in a standby state, i.e. a state in which audio is not output from the internal speakers 205 or the multi-channel speakers 105.

In the standby state, the minimum electrical power necessary for selecting a video signal and an audio signal is supplied to the AIS 102 and the VIS 110. Likewise, the minimum electrical power necessary for selecting a video signal and an audio signal is also supplied to the AIS 202 and the VIS 210. Also, when outputting audio from the internal speakers 205, necessary electrical power is supplied to the audio processing part 203A and the volume control part 204 from a power supply (not shown) built into the TV 200A.

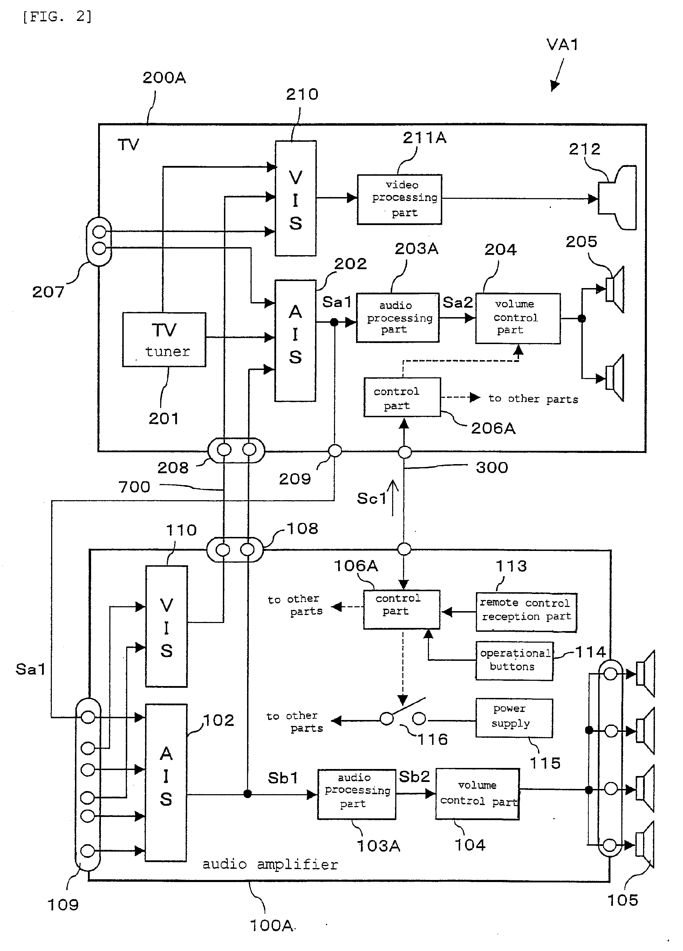

Below, the method for controlling the internal speakers 205 with the audiovisual system VA1 according to this embodiment will be specifically described with reference to FIGS. 2, 3, 4, and 5. FIG. 2 shows the configuration of the audiovisual system VA1 as in FIG. 1, but for the sake of convenience of describing the method for controlling the internal speakers 205 when a television broadcast is reproduced, the STB 214, and the video deck 400, DVD player 500A, and CD player 600 of the audio amplifier 100A, are not shown.

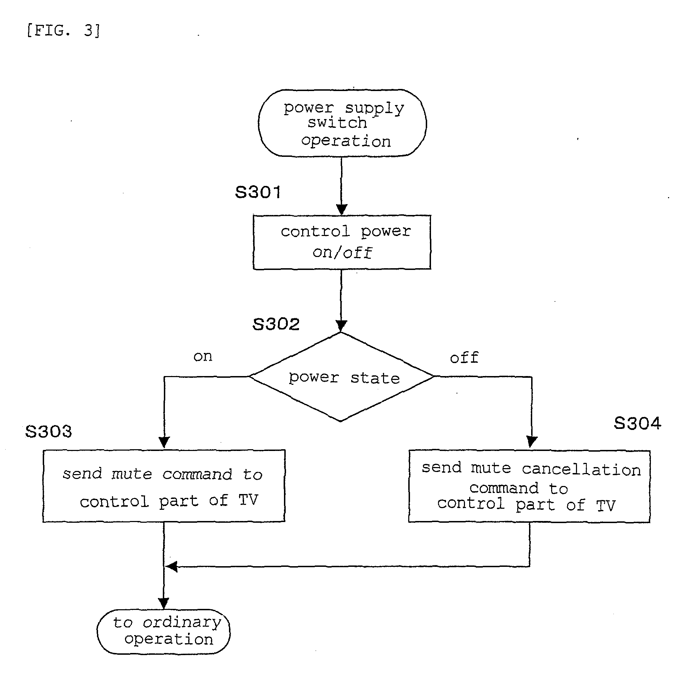

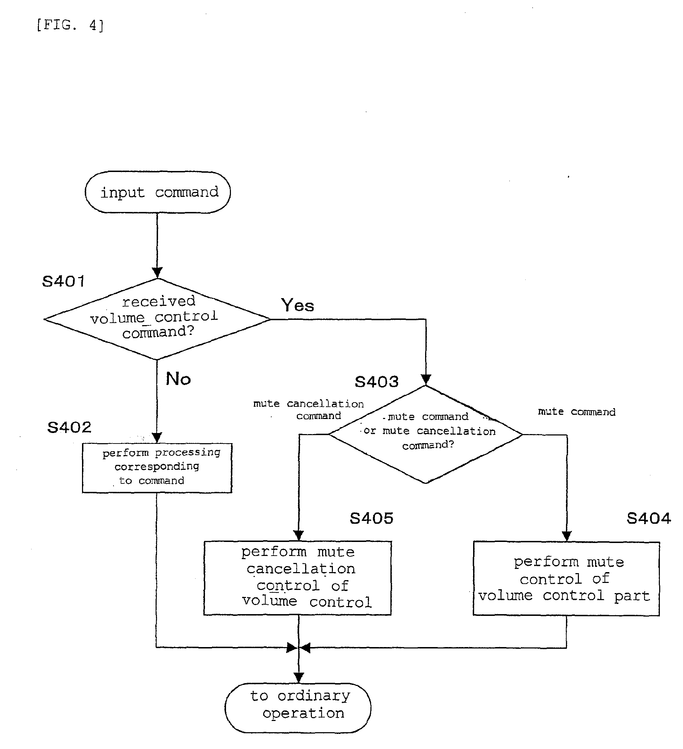

The flowchart in FIG. 3 shows a control operation (command generation) of the control part 106A for controlling the internal speakers 205, related to on/off of the power supply of the audio amplifier 100A. The flowchart in FIG. 4 shows a control operation of the control part 206A of the TV 200A corresponding to the control operation of the control part 106A of the audio amplifier 100A.

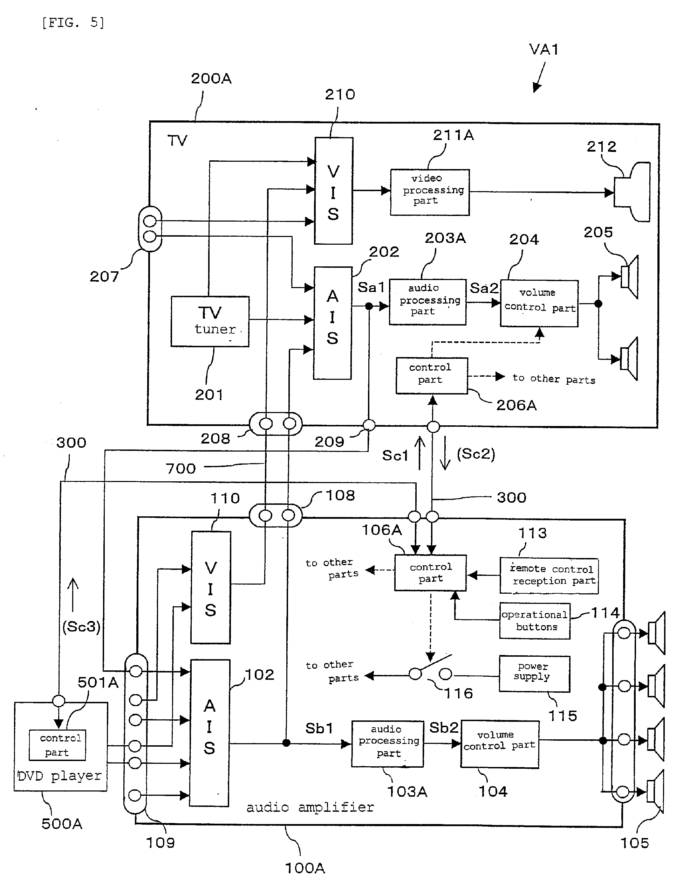

FIG. 5 shows the configuration of the configuration of the audiovisual system VA1 as in FIG. 1, but for the sake of convenience of describing the method for controlling the internal speakers 205 when a DVD is played, the STB 214, and the video deck 400 and CD player 600 of the audio amplifier 100A, are not shown, although the internal configuration of the DVD player 500A is shown.

Output of the control signal Sc1 by the control part 106A as a command to the TV 200A according to a user instruction or the state of the audio amplifier 100A is as described above. Also, the control part 106A controls operation of the power supply switch 116, and generates the control signal Sc1 according to the on/off state of the power supply switch 116. Based on this control signal Sc1, the TV 200A adjusts the volume of the internal speakers 205. The control signal Sc1 in this case is a command that instructs volume adjustment of the internal speakers 205 (referred to below as a "volume control command").

The volume control command can be further classified into a mute command and a mute cancellation command depending on the contents of the volume adjustment instruction to the internal speakers 205. That is, when the volume of the internal speakers 205 is raised, the control signal Sc1 is a mute cancellation command that instructs the control part 206A to cancel muting. Likewise, when the volume of the internal speakers 205 is lowered, the control signal Sc1 is a mute command that instructs the control part 206A to mute.

Below is a description of, control of the internal speakers 205 by the audiovisual system VA1 when reproducing audio of a television broadcast, and when playing a DVD.

### When Reproducing Audio of Television Broadcast

As described above, in the invention, when the internal speakers 205 of the home theater system VA1 are in an on state, i.e., when the TV 200A is in a powered on state, based on the user's on/off operation of the power supply 115 of the audio amplifier 100A connected to the external speakers 105, either the internal speakers 205 or the external speakers 105 are automatically selected. That is, control of the internal speakers 205 according to the invention is started when, with the TV 200A in a powered on state, the power supply 115 of the audio amplifier 100A is powered on/off.

In other words, the TV 200A is in a powered on state before the control of the internal speakers 205 according to the invention is started. At this time, based on control of the control part 206A, the AIS 202 selects the audio signal that has been output from the TV tuner 201. The audio processing part 203A generates the audio signal Sa2 based on the selected audio signal Sa1. The audio signal Sa2, via the volume control part 204, is output from the internal speakers 205 as audio at the designated volume.

On the other hand, based on control of the control part 206A, the VIS 210 selects the video signal that has been output from the TV tuner 201. Necessary processing is performed on the selected video signal by the video processing part 211A. The video signal output from the video control part 211A is displayed on the display 212 as video.

As described above, a case is conceived in which, in a state in which the user is enjoying audio output from the internal speakers 205 of the TV 200A, audio output from the TV tuner 201 has been switched to multi-channel broadcast audio. In this case, control of the internal speakers 205 is started at the point in time that the power supply 115 of the audio amplifier 100A is powered on so that the user enjoys powerful sound using the multi-channel speakers 105 of the audio amplifier 100A, not the internal speakers 205.

Below, operation of the control part 106A related to on/off of the power supply 115 of the audio amplifier 100A will be described with reference to FIG. 3.

In Step S301, the control part 106A analyzes the remote control command, and performs on/off control of the power supply 115 according to the content of the instructions of the command.

In Step S302, when judged that the power supply 115 is in the "on state", the control of the control part 106A proceeds to Step S303.

In Step S303, because audio cannot be output from the internal speakers 205 of the TV 200A, the control part 106A generates the control signal Sc1 as a mute command. The control signal Sc1 (the mute command) is input to the control part 206A of the TV 200A via the communication means 300.

On the other hand, in above Step S302, when judged that the power supply 115 is in the "off state", the control of the control part 106A proceeds to Step S304.

In Step S304, because audio is output from the internal speakers 205 of the TV 200A, the control part 106A generates the control signal Sc1 as a mute cancellation command. The control signal Sc1 (the mute cancellation command) is input to the control part 206A of the TV 200A via the communication means 300.

In the above flowchart, the power supply 115 is powered on by the user depressing a power button of the remote control. That is, in response to depressing of a remote control button, a power supply operation remote control command is input to the control part 106A from the receiver part 113.

Next is a description of operation of the control part 206A of the TV 200A that corresponds to operation of the control part 106A of the audio amplifier 100A, with reference to FIG. 4. First, in Step S401, a judgment is made of whether or not the control signal Sc1 that has been input to the control part 206A is a volume control command, that is, the control command Sc1 that was input to the control part 206A in above Step S303. When not a volume control command, in Step S402, processing corresponding to the input command is performed. On the other hand, when judged in Step S401 that the input control signal Sc1 is a volume control command, the control proceeds to Step S403.

In Step S403, a judgment is made of whether the volume control command is a mute command or a mute cancellation command. When judged to be a mute command, in Step S404 audio output from the internal speakers 205 is muted.

When judged to be a mute cancellation command in Step S403, in Step S405 muting of audio output from the internal speakers 205 is cancelled.

The power supply 115 is powered on by depression of a power button of the remote control by the user (Step S301), so the power supply 115 is judged to be in the on state (Step S302), and then the control signal Sc1, which is a mute command, is sent to the control part 206A (Step S303).

Further, it is judged by the control part 206A that the control signal Sc1 sent from the control part 106A is a volume control command that is a mute command (Steps S401 and S403), and thus the internal speakers 205 are muted (Step S404). In this way, with an operation by the user to power on the power supply 115 of the audio amplifier 100A, the internal speakers 205 are muted and audio is output from the external speakers 105.

More specifically, the audio signal Sa1 that has been output from the AIS 202 of the TV 200A is also input to the AIS 102 of the audio amplifier 100A, via the terminal 209, the cord 800, and the terminal 109. When the audio amplifier 100A is in the "power on state", the AIS 102 selects the audio signal that has been output from the TV tuner 201, based on an instruction of the control part 106A. The audio processing part 103A performs predetermined processing on the audio signal Sb1 from the TV tuner 201 (same as the audio signal Sa1), such as conversion to multi-channel audio, and thus the audio signal Sb1 becomes the audio signal Sb2. The volume of the audio signal Sb2 is adjusted by the volume control part 104, and then the audio signal Sb2 is output from the multi-channel speakers 105.

Next is a description of a case in which, as described above, when the audio amplifier 100A is powered on and the internal speakers 205 are muted, and audio is output from the external speakers 105, the user attempts to power off the audio amplifier 100A, for example by depressing a power button among the operational buttons 114. In Step S301 in FIG. 3, the control part 106A analyzes that button operation. The control part 106A judges based on the results of analysis that there was an instruction to turn off power, and by setting the power supply switch 116 to off, places the audio amplifier 100A in the "power supply off state".

In Step S302 the audio amplifier 100A is judged to be in the "power supply off state", and in Step S304, in order to output audio from the internal speakers 205 of the TV 200A, the control signal Sc1 is sent as a mute cancellation command to the control part 206A.

Further, it is judged by the control part 206A that the control signal Sc1 sent from the control part 106A is a volume control command that is a mute cancellation command (Steps S401 and S403), and thus muting of the internal speakers 205 is cancelled (Step S405). In this way, with an operation by the user to power off the power supply 115 of the audio amplifier 100A, muting of the internal speakers 205 is cancelled and audio is output from the internal speakers 205. At this time, the audio amplifier 100A is in the "power off state", so audio is not output from the multi-channel speakers 105.

In this manner, when the power supply switch 116 of the audio amplifier 100A is on, audio of the TV tuner 201 built into the TV 200A is output from the multi-channel speakers 105 of the audio amplifier 100A. As a result, audio is not output from the internal speakers 205 of the TV 200A.

Conversely, when the power supply switch 116 of the audio amplifier 100A is changed from on to off, audio is not output from the multi-channel speakers 105. In this state, audio of the built-in TV tuner 201 of the TV 200A is output from the internal speakers 205.

Above, a case was described in which a TV broadcast is viewed/listened to with the internal TV tuner 201, but the same effects are obtained when reproducing a TV broadcast received with the STB 214 connected to the input terminal 209.

### When a DVD is Played

Control of the internal speakers 205 when playing contents recorded on a DVD with the DVD player 500A will be described with reference to FIGS. 3, 4, and 5. As stated above, in FIG. 5, display of the STB 214, and the video deck 400 and CD player 600, shown in FIG. 1 is omitted.

First is a description of a case in which the power supply switch 116 of the audio amplifier 100A is switched to off, so that the audio amplifier 100A is in the "power off state". Based on instructions from the control part 106A, the VIS 110 selects the video signal that has been output from the DVD player 500A. The video signal that has been output from the VIS 110 is input to the VIS 210 of the TV 200A via the output terminal 108 and the input terminal 209. Subsequent processing is the same as in the case of reproducing a TV broadcast received with the TV tuner 201, so a description thereof is omitted here.

On the other hand, based on an instruction of the control part 106A, the AIS 102 selects the audio signal that has been output from the DVD player 500A from among multiple audio signals. The audio signal Sb1 that has been output from the AIS 102 is input to the AIS 202 of the TV 200A via the output terminal 108 and the input terminal 208. The AIS 202 selects the audio signal Sb1 from the DVD player 500A.

The audio processing part 203A performs necessary processing on the audio signal Sa1 output from the AIS 202 (same as the audio signal Sb1), and thus the audio signal Sa1 becomes the audio signal Sa2. The volume of the audio signal Sa2 is adjusted by the volume control part 204, and then output from the internal speakers 205 as audio. At this time, the audio amplifier 100A is in the "power off state", so audio is not output from the multi-channel speakers 105 connected to the audio amplifier 100A.

Next is a description of a case in which powerful sound is enjoyed using the multi-channel speakers 105 of the audio amplifier 100A. The user, for example, presses a power button of a remote control (not shown) of the audio amplifier 100A. A power supply operation remote control command is input to the control part 106A from the remote control receiver part 113. The control part 106A analyzes that command (Step S301 in FIG. 3). When the control part 106A judges that there is an instruction to power on the power supply 115, the power supply switch 116 is controlled on, thus placing the audio amplifier 100A in the "power supply on state". At this time, to establish a state in which audio is not output from the internal speakers 205 of the TV 200A, the control part 106A sends a mute command to the control part 206A of the TV 200A via the communication means 300 (Steps S302 and S303 in FIG. 3).

After receiving the mute command, the control part 206A of the TV 200A controls the volume control part 204 so that audio is not output from the internal speakers 205 (Steps S401, S402, and S403 in FIG. 4).

Based on an instruction of the control part 106A, the AIS 102 selects the audio signal that has been output from the DVD player 500A. The audio processing part 103A performs necessary processing on the audio signal Sb1 output from the AIS 102, and thus the audio signal Sb1 becomes the audio signal Sb2. The volume of the audio signal Sb2 is adjusted by the volume control part 104, and then the audio signal Sb2 is output as audio from the multi-channel speakers 105.

Next is a description of a case in which the user, for example, presses a power button of the operational buttons 114 in order to power off the audio amplifier 100A. The control part 106A analyzes that button operation, and controls the power supply switch 116 off, thus placing the audio amplifier 100A in the "power supply off state" (Step S301 in FIG. 3). At this time, to establish a state in which audio is output from the internal speakers 205 of the TV 200A, the control part 106A sends a mute cancellation command to the control part 206A of the TV 200A via the communication means 300, the mute cancellation command returning the volume of the internal speakers 205 to its original state (Steps S302 and S304 in FIG. 3). After receiving this command, the control part 206A controls the volume control part 204 to release the muted state so that audio is output from the internal speakers 205 (Steps S401, S403, and S405 in FIG. 4).

Accordingly, when the power supply switch 116 of the audio amplifier 100A is switched so that power is on, audio of the DVD player 500A is output from the multi-channel speakers 105 of the audio amplifier 100A. Also, at the same time, audio is not output from the internal speakers 205 of the TV 200A. Conversely, when the power supply switch 116 of the audio amplifier 100A is off, audio is not output from the multi-channel speakers 105, and audio of the DVD player 500A is output from the internal speakers 105 of the TV 200A.

Note that in this embodiment, power is turned on/off by a user controlling the power supply switch 116 of the audio amplifier 100A on/off using the remote control of the audio amplifier 100A or the like. However, it is also possible to switch the power supply switch 116 of the audio amplifier 100A on/off using the remote control of the TV 200A. Specifically, a power supply operation remote control command of the audio amplifier 100A is input to the control part 206A using the remote control for the TV 200A. The control part 206A analyzes that command, and as shown in FIG. 5, sends the control signal Sc2 to the control part 106A of the audio amplifier 100A, the control signal Sc2 instructing on/off of the power supply switch 116.

When this sort of operating method is used, it is possible to switch the power supply switch 116 of the audio amplifier 100A on/off using a GUI menu or the like displayed on the display 212 of the TV 200A. As a result, the speakers can be switched by only operating the remote control for the TV, so operability of the system is further improved.

Likewise, a configuration may be adopted in which a control signal that instructs turning the power of the audio amplifier 100A on/off is sent to the control part 106A of the audio amplifier 100A from a control part of an external device connected to the system. For example, as shown in FIG. 5, a control signal Sc3 that instructs on/off of the power supply switch 116 is sent to the control part 106A of the audio amplifier 100A from a control part 501 of the DVD player 500A. By adopting such a configuration, the speakers can be switched by only operating the DVD player 500A, so the same effect can be obtained as in the case of using the remote control of the TV.

As described above, in this embodiment, switching between the internal speakers 205 of the TV 200A and the multi-channel speakers 105 of the audio amplifier 100A is automatically performed by only operating the power supply switch 116 of the audio amplifier 100A on/off. As a result, it is possible to provide an audiovisual system in which operability of selection of individual speakers required of the user is improved, thus reducing the burdensomeness of operation.

Also, in this embodiment, the volume control part 204 of the TV 200A is an example of an audio output control part of the invention. A method was adopted in which in order to prevent audio from being output from the internal speakers 205, the volume control part 204 performs muting, i.e. turns down the volume, but this is not a limitation.

For example, the audio output control part may be provided with, other than a function to turn down the volume, a function to block transmission of signals to the internal speakers 205. Also, it is possible to completely prevent audio from being output from the internal speakers 205 by turning off a switch or the like in the audio output control part based on an instruction of the control part 206A. Further, it is possible to prevent audio from being output from the internal speakers 205 by controlling the AIS 202 based on an instruction of the control part 206A to prevent an audio signal from being output from the AIS 202. The same is true for the volume control part 104 of the audio amplifier 100A as for the volume control part 204.

Also, in this embodiment, the AIS 202 and the AIS 102 are examples of the audio input selection part of the invention. In this embodiment, an audio input selection part is provided in the TV 200A and in the audio amplifier 100A, but a configuration may also be adopted in which an audio input selection part is provided only in either the TV 200A or the audio amplifier 100A, corresponding to the emitting source of the video signal and the audio signal. Further, a configuration may be adopted in which an audio input selection part is provided separate from the TV 200A and the audio amplifier 100A, and its output is connected to the input of the TV 200A and the audio amplifier 100A.

Also, in this embodiment, the audio amplifier directly instructs volume control to the TV with the control signals, but a configuration may also be adopted in which the TV is notified of the power state of the audio amplifier, or instead is notified of a control signal that has been defined in advance, and based on that information, the TV controls the volume.

Also, in this embodiment, control signals are generated corresponding respectively to the on and off states of the power supply switch 116 of the audio amplifier 100A, but a configuration may also be adopted in which a control signal is generated corresponding only to a change in one of either the on state or the off state of the power supply switch.

### Second Embodiment

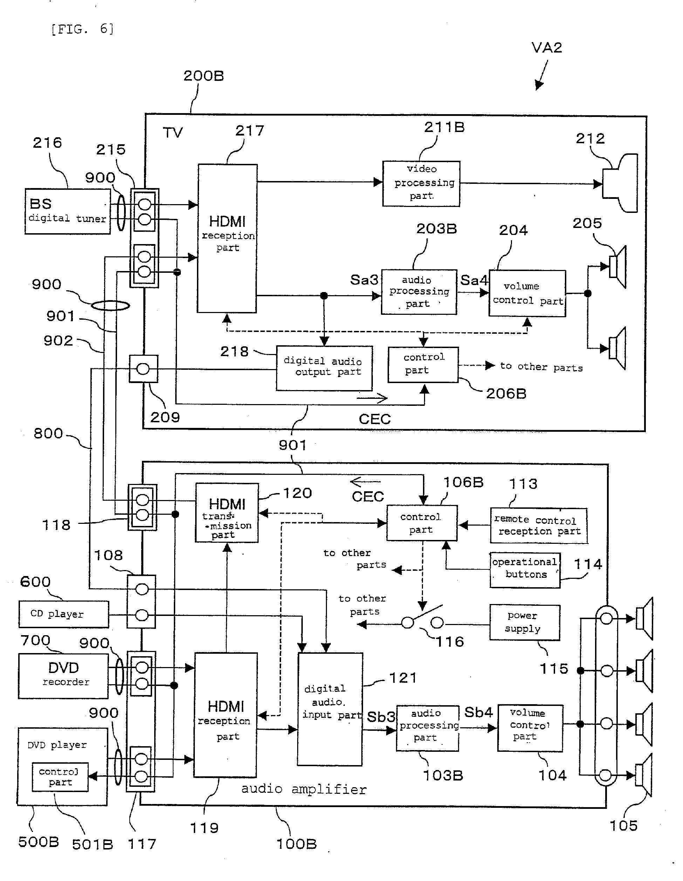

An audiovisual system according to a second embodiment of the invention will be described with reference to FIG. 6. In FIG. 6, the same reference numerals are given to parts that have the same function as the constituent elements of the audiovisual system VA1 shown in FIG. 1, and a detailed description thereof is omitted here.

More specifically, in an audiovisual system VA2 according to this embodiment, a TV 200B and an audio amplifier 100B, and also the audio amplifier 100B and a DVD player 500B and DVD recorder 700 that are external devices, are connected with cables 900 (referred to below as "HDMI cables") that are compliant with HDMI specifications. By using the HDMI cables 900, it is possible to include lines that transmit audio signals and video signals, and lines that send control signals compliant with CEC specifications, in a single cable. As a result, the connection between devices becomes easy.

First, transmission of signals via the HDMI cables 900 will be simply described. In FIG. 6, for example, a video signal and an audio signal that have been output from the DVD player 500B are transmitted to the audio amplifier 100B via an HDMI cable 900. Likewise, a video signal and an audio signal that have been output from the audio amplifier 100B are transmitted to the TV 200B via an HDMI cable 900. The TV 200B, the AV amplifier 100B, and the DVD player 500B can send to/receive from each other control commands (referred to below as a "CEC signal") compliant with the aforementioned CEC via the HDMI cables 900. The CEC signal is used as a volume control command, same as the control signal Sc1 in the audiovisual system VA1.

An HDMI cable 900 is configured with a CEC line 901 that sends CEC signals, and a video/audio line 902 that sends video signals and audio signals. Via the CEC line 901, respective control parts 206B, 106B, and 501B of the TV 200B, the audio amplifier 100B, and the DVD player 500B can send/receive CEC signals to/from each other. On the other hand, via the video/audio line 902, each device can transmit video signals and audio signals among HDMI receiving parts and HDMI sending parts.

Also, from the viewpoint,of copyright protection, so that unscrambled video signals or audio signals are not present on the HDMI cable 900, video signals and audio signals are transmitted between an HDMI reception part and an HDMI transmission part. Further, the video signals and audio signals transmitted on the HDMI cable 900 basically are digitized signals.

Next is a description of constituent elements newly provided corresponding to the HDMI cable 900. The control part 106B of the audio amplifier 100B performs processing according to a CEC signal received via HDMI connectors 117 and 118. For example, the control part 106B outputs audio signals received by an HDMI reception part 119 to a digital audio input part 121. Also, the control part 106B again outputs video signals and audio signals received by the HDMI reception part 119 from an HDMI transmission part 120 to the HDMI cable 900.

The HDMI reception part 119 uses an encryption key to descramble video signals and audio signals that have been sent from the DVD player 500B via the video/audio line 902 of the HDMI cable 900. On the other hand, the HDMI transmission part 120 uses an encryption key to rescramble the video signals and audio signals that have been descrambled by the HDMI reception part 119, and then feeds the rescrambled video signals and audio signals to the audio/video line 902 of the HDMI cable 900.

An HDMI reception part 217 uses an encryption key to descramble the video signals and audio signals input via an HDMI connector 215. The descrambled video signals are output to a video processing part 211B. The video processing part 211B performs decoding processing and necessary processing on the video signals. Also, the descrambled audio signals are output to an audio processing part 203B. The audio processing part 203B performs decoding processing and necessary processing on the audio signals.

Also, in this embodiment, transmission of video signals and audio signals using the video/audio line 902 of the HDMI cable 900 is set to be performed only in the direction from the audio amplifier 100B to the TV 200B. Accordingly, it is not possible to transmit audio signals from the TV 200B to the audio amplifier 100B using the HDMI cable 900.

Therefore, a dedicated line that forwards audio signals from the TV 200B to the audio amplifier 100B is provided. More specifically, the audio signals that have been output from a digital audio output part 218 of the TV 200B are forwarded to the digital audio input part 121 of the audio amplifier 100B via the output terminal 209, the cord 900, and the input terminal 108. The digital audio output part 218 and the digital audio input part 121 are provided with a function to, for example when forwarding audio signals using an optical cable, convert an electrical signal to an optical signal, and convert an optical signal to an electrical signal.

The HDMI reception part 119 of the audio amplifier 100B, other than the function above, has the same function as the AIS 102 and the VIS 110 in FIG. 1. That is, based on control of the control part 106B, the HDMI reception part 119 selects the video signal and the audio signal forwarded from the DVD player 500B or the video signal and the audio signal forwarded from the DVD recorder 700. The digital audio input part 121 also is provided with the same function as the AIS 102 in FIG. 1. The digital audio input part 121, based on control of the control part 106B, selects an audio signal from among the audio signal that has been output from the HDMI reception part 119, the audio signal that has been output from the CD player 600, and the audio signal forwarded from the TV 200B via the input terminal 108.

The HDMI reception part 217 of the TV 200B is provided with the same function as the AIS 202 and the VIS 210 in FIG. 1. Specifically, the HDMI reception part 217, based on control of the control part 206B, selects the video signal and the audio signal that have been output from a BS digital tuner connected to the HDMI connector 215, or the video signal and the audio signal that have been forwarded from the audio amplifier 100B via the HDMI cable 900. Of the selected signals, the video signal is input to the video processing part 211B, and the audio signal is input to the audio processing part 203B.

Next is a description of the operation of each part when an audio signal of a TV broadcast received by a BS digital tuner 216 is output from the multi-channel speakers 105 of the audio amplifier 100B.

Based on a user instruction using an unshown remote control, the HDMI reception part 217 of the TV 200B selects output of the BS digital tuner 216. In this case, when a mode in which the audio signal of the TV broadcast is output from the external speakers 105 is selected as the audio output mode, same as the control signal Sc2 in FIG. 5, a CEC signal that powers on the audio amplifier 100B is transmitted from the control part 206B of the TV 200B, and thus the audio amplifier 100B is set to a powered on state based on control of the control part 106B.

The video signal included in the TV broadcast received by the BS digital tuner 216, based on an instruction of the control part 206B, is selected by the HDMI reception part 217, and input to the video processing part 211B. Decoding processing and necessary processing is performed on the video signal by the video processing part 211B, and then that video signal is displayed on the display 212 as video.

On the other hand, the audio signal included in the TV broadcast, based on an instruction of the control part 206B, is selected by the HDMI reception part 217, and then input to the audio processing part 203B and the digital audio output part 218. Decoding processing and necessary processing is performed on an audio signal Sa3 input to the audio processing part 203B, and thus the audio signal Sa3 becomes an audio signal Sa4. The audio signal Sa4 is output to the audio control part 204. However, in this case, audio is set to be output from the multi-channel speakers 105 of the audio amplifier 100B, and the volume control part 204 is controlled so as to enter a muted state by the control part 206B, so audio is not output from the internal speakers 205.

The audio signal Sa3 that has been output from the digital audio output part 218 is transmitted to the digital audio input part 121 via the output terminal 209, the cord 800, and the input terminal 108. Based on an instruction of the control part 106B, an audio signal Sb3 (same as the video signal Sa3) of the TV broadcast selected by the digital audio input part 121 is decoded in the audio processing part 103B, and necessary processing is performed on the audio signal Sb3, which thus becomes an audio signal Sb4. In the volume control part 104, the same processing as in the first embodiment is performed on the audio signal Sb4 that has been output from the audio processing part 103B, and then the audio signal Sb4 is output as audio from the multi-channel speakers 105.

In the above audiovisual system of this embodiment, processing that determines whether the TV 200B outputs audio from the internal speakers or is muted based on a CEC signal that indicates the power on/off state and is sent from the audio amplifier 100B, is the same as the processing described in the first embodiment.

First is a description of a case in which the power supply switch 116 of the audio amplifier 100B is switched to off, so that the audio amplifier 100B is in the "power off state". In this case, the audio amplifier 100B is in a standby state, so audio is not output from the external speakers 105. In this state as well, the video signal and the audio signal of the DVD player 500B or the DVD recorder 700 that have been selected can be transmitted to the HDMI reception part of the TV 200B via the HDMI reception part 119 and the HDMI transmission part 120.

Next a case will be described in which, for example, in a state in which a video signal and an audio signal of the DVD player 500B are reproduced using the display 212 and the internal speakers 205 of the TV 200B, the audio signal is output with the external speakers 105 of the audio amplifier 100B.

First, when the power supply switch 116 of the audio amplifier 100B is switched on, the audio amplifier 100B changes from the "power off state", which is a standby state, to the "power on state". Based on control of the control means 106B, the audio signal from the DVD player 500B selected by the HDMI reception part 119 is transmitted to the external speakers 105 and output as audio, via the digital audio input part 121, the audio processing part 103B, and the volume control part 104. Also, the control part 106B sends a CEC signal that corresponds to a mute command, via the CEC line 901, to the control part 206B of the TV 200B. When the CEC signal is received, the control part 206B of the TV 200B, according to the flow in FIG. 4 described above, controls the volume control part 204 so that audio is not output from the internal speakers 205.

As a result, audio is output from the external speakers 105, and audio is not output from the internal speakers 205. That is, from the standpoint of the user, by only operating the power supply switch 116 of the audio amplifier 100B on, a state can be established in which audio can be output from the external speakers 105 of the audio amplifier 100B, and the internal speakers 205 of the TV 200B are muted.

Next, when the audio amplifier 100B changes from the "power on state" to the "power off state", via the CEC line 901, a CEC signal that corresponds to a mute cancellation command is transmitted between the control part 106B and the control part 206B. As a result, the external speakers 105 are muted and audio is output from the internal speakers 205. Processing at this time is performed according to the flowcharts shown in FIGS. 3 and 4 described above. As a result, from the standpoint of the user, by only operating the power supply switch 116 of the audio amplifier 100B off, a state can be established in which the external speakers 105 are muted, and audio can be output from the internal speakers 205 of the TV 200B.

### Third Embodiment

Next, an audiovisual system according to a third embodiment of the invention will be described. An audiovisual system VA3 (not shown) according to the third embodiment has basically the same configuration as the audiovisual system VA1 shown in FIG. 1 and the audiovisual system VA2 shown in FIG. 6. However, in this specification, for the sake of convenience of the description, the audiovisual system VA3 has the same configuration as the audiovisual system VA2. However, in the audiovisual system VA3, the control part 206B of the TV is provided with, in addition to the functions in the audiovisual system VA2, a function to monitor the state of communication with the audio amplifier 100B. The control part 206B, based on the results of that monitoring, controls whether or not audio is output from the internal speakers 205.

In the audiovisual system VA3 as well, same as in the audiovisual system VA2, the control part 206B of the TV 100B determines whether or not to output audio from the internal speakers 205 based on a CEC signal that includes a "mute command" or a "mute cancellation command" sent from the control part 106B of the audio amplifier 100B. However, in the audiovisual system VA3, the control part 206B of the TV 200B further determines whether or not to output audio from the internal speakers 205 based on the results of monitoring the state of communication with the audio amplifier 100B.

With the audiovisual system VA3, control of the internal speakers 205 based on a CEC signal sent from the control part 106B of the audio amplifier 100B is the same as in the audiovisual system VA2, so a description thereof is omitted here.

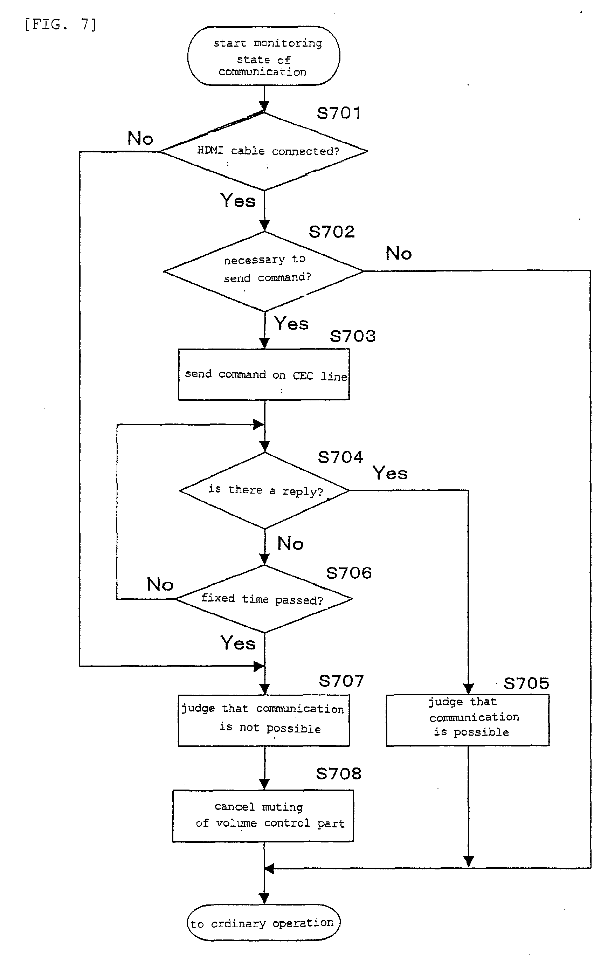

Below, control of the internal speakers 205 by the audiovisual system VA3 based on the state of communication with the audio amplifier 100B is described with reference to FIGS. 6 and 7.
Here, monitoring the state of communication with the audio amplifier 100B means monitoring whether or not communication with the control part 106B of the audio amplifier 100B via the HDMI cable 900, which is a communication means is possible. The following is an example of a specific case in which communication is not possible. There are instances when the HDMI cable 900 is detached from the TV 200B or the audio amplifier 100B for some reason, or when the plug of a power cord of the audio amplifier 100B is detached from a power socket and power is not supplied to the control part 106B, or when battery capacity of a battery-powered audio amplifier 100B becomes small and thus voltage is greatly reduced.

The flowchart in FIG. 7 shows the operation of the control part 206B, which monitors the communication state using the CEC line 901 of the HDMI cable 900. Below is a description of processing related to monitoring of the communication state with reference to FIGS. 6 and 7.
Here, for the sake of convenience, first it is assumed that, according to the same method as described in the first and second embodiments, the audio amplifier 100B is in the "power on state", so audio is output from the multi-channel speakers 105. In this state, the TV 200B receives a mute command sent from the audio amplifier 100B, so audio is not output from the internal speakers 205.

The TV 200B is in the "power on state", and the control part 206B is constantly monitoring the state of communication with the control part 106B of the audio amplifier 100B via the CEC line 901. In Step S701, the control part 206B judges the connection state of the HDMI cable 900 connected between the TV 200B and the audio amplifier 100B. Because voltage or the like changes depending on whether or not the HDMI cable 900 is properly connected, the judgment can be performed by detecting that change. When judged in Step S701 that the HDMI cable 900 is not properly connected, for example when the HDMI cable 900 has been pulled out, processing advances to Step S707.

If judged in Step S701 that the HDMI cable is connected, processing advances to Step S702. In Step S702, the control part 206B judges whether or not it is necessary to send a command to the audio amplifier 100B with an instruction or the like from an operation means, and if necessary, processing proceeds to Step S703, and if not necessary, processing proceeds to ordinary operation.

In Step S703, the control part 206B sends a command via the CEC line. The control part 206B sends, for example, a command requesting reporting of the on/off state of the power supply 115 to the control part 106B of the audio amplifier 100B. In Step S704, the control part 206B judges whether or not there is a reply to that command from the control part 106B. When there was a reply, the control part 206B, in Step S705, judges the state to be one in which communication with the control part 106B is possible, and processing proceeds to ordinary operation.

On the other hand, when there was not a reply in Step S704, processing proceeds to Step S706. In Step S706, when there is not a command reply even after passage of a fixed time, the control part 206B, in Step S707, judges the state to be one in which communication with the control part 106B is not possible. In this case, control of each part of the audio amplifier 100B by the control part 106B cannot be appropriately performed, so audio cannot be output from the multi-channel speakers 105. Thus, in Step S708, the control part 206B instructs the volume control part 204 to cancel muting of the internal speakers 205 that were muted in above Step S404.

Note that in the invention, muting of the internal speakers 205, same as in the above audiovisual system VA2, is performed by controlling the volume control part 104 based on sending of a CEC signal from the control part 106B to the control part 206B. However, naturally, the cancellation of muting of the internal speakers 205 in this embodiment is effective also when the internal speakers 205 are muted by another desired method.

In this embodiment, the control part 206B of the TV 200B is constantly monitoring the state of communication with the control part 106B of the audio amplifier 100B. In a state in which communication cannot be performed for some reason, the control part 206B performs control of the volume control part 104 such that audio is output from the internal speakers 205. As a result, it is possible to avoid occurrence of a state in which audio is not output from either the multi-channel speakers 105 or the internal speakers 205.

Also, in this embodiment, monitoring of the communication state is performed by two methods, namely detecting the voltage or the like of the CEC line 901 and judging whether or not there is a reply command, so even a state occurs in which communication is not possible due to varying causes, that state can be reliably judged.

Also, in this embodiment, an example of monitoring the state of communication using the CEC line 901 of the HDMI cable 900, shown in FIG. 6, was described, but this is not a limitation. For example, it is also possible to judge a state in which communication is not possible by detecting control signals transmitted between the control part 206A of the TV 200A and the control part 106A of the audio amplifier 100A in the first embodiment. Also, it is possible to judge a state in which communication is not possible by detecting from some change in state that a connection between devices has been broken.

### Industrial Applicability

According to the invention, it is possible to provide an audiovisual system in which operability of individual speakers required of a user is improved, so the invention is widely applicable in home theater systems that are used at home and are provided with a TV and an audio amplifier that are required to be operated in coordination.

## Claims

1. An audiovisual system comprising a video/audio reproduction apparatus that reproduces video and audio, a sound reproduction apparatus that outputs audio from external speakers, and a communication means connected between the video/audio reproduction apparatus and the sound reproduction apparatus, wherein an audio signal that has been selected from a plurality of audio signals is output to either internal speakers of the video/audio reproduction apparatus or external speakers of the sound reproduction apparatus, and wherein
(a) the video/audio reproduction apparatus comprises a first audio output control part that controls output to the internal speakers (205) using the selected audio signal as input, and
a first control part that controls at least the first audio output control part, and
(b) the sound reproduction apparatus comprises a second audio output control part that controls output to the external speakers using the selected audio signal as input, and
a second control part that controls at least the second audio output control part,
(c) wherein the first and second control parts are capable of communicating with each other via the communication means, and the first control part controls the first audio output control part based on information obtained via the communication means.

2. The audiovisual device according to claim 1, wherein the second control part sends a first control signal to the first control part via the communication means, based on a power on or off state of the sound reproduction apparatus, and the first control part controls the first audio output control part according to the received first control signal.

3. The audiovisual device according to claim 2, wherein the first control part controls the first audio output control part such that, when a signal indicating that power is on is received as the first control signal, the internal speakers are in a muted state, and when a signal indicating that power is off is received, the muted state of the internal speakers is cancelled.

4. The audiovisual device according to claim 2, wherein the first control part sends a second control signal to the second control part that instructs powering the sound reproduction apparatus on or off, and the second control part, based on the received second control signal, controls power of the sound reproduction apparatus on or off and sends the first control signal based on the power on or off state to the first control part.

5. The audiovisual device according to claim 2, wherein from a third control part provided in a third apparatus having a function to reproduce video signals and audio signals, a third control signal that instructs powering the sound reproduction apparatus on or off is sent to the second control part, and the second control part, based on the received third control signal, controls power of the sound reproduction apparatus on or off and sends the first control signal based on the power on or off state to the first control part.

6. The audiovisual device according to claim 2, wherein the first control signal is a signal compliant with Consumer Electronics Control (CEC) specifications.

7. The audiovisual system according to claim 1, wherein the first control part monitors the state of communication with the second control part, and controls the first audio output control part such that the internal speakers are in a muted state when communication is possible, and controls the first audio output control part such that the muted state of the internal speakers is cancelled when communication is not possible.

8. The audiovisual system according to claim 1, further comprising an audio input selection part that selects one audio signal from a plurality of audio signals.

9. The audiovisual system according to claim 8, wherein the audio input selection part comprises a first audio input selection part built into the video/audio reproduction apparatus, and a second audio input selection part built into the sound reproduction apparatus.

10. The audiovisual system according to claim 9, further comprising a first audio processing part that performs necessary processing on an audio signal that has been output from the first audio input selection part.

11. The audiovisual system according to claim 9, further comprising a second audio processing part that performs necessary processing on an audio signal that has been output from the second audio input selection part.

12. The audiovisual system according to claim 1, wherein the communication means is a signal line compliant with High Definition Multimedia Interface (HDMI) specifications.

13. The audiovisual system according to claim 1, wherein the video/audio reproduction apparatus is a television receiver, and the sound reproduction apparatus is an audio amplifier.

14. A video/audio reproduction apparatus that, along with a sound reproduction apparatus that outputs audio from external speakers, constitutes an audiovisual system, and outputs an audio signal selected from a plurality of audio signals to either external speakers of the sound reproduction apparatus or internal speakers of the video/audio reproduction apparatus, the video/audio reproduction apparatus comprising:
an audio output control part that controls output to the internal speakers using the selected audio signal as input, and
a control part that is capable of bilaterally communicating with the sound reproduction apparatus via a communication means, and controls at least the audio output control part,
wherein the control part controls the audio output control part based on information obtained via the communication means.

15. The video/audio reproduction apparatus according to claim 14, wherein the control part controls the audio output control part according to a control signal based on the power on/off state sent from the sound reproduction apparatus via the communication means.

16. The video/audio reproduction apparatus according to claim 15, wherein the control part controls the audio output control part such that, when a control signal indicating that power is on is received, the internal speakers are in a muted state, and when a control signal indicating that power is off is received, the muted state of the internal speakers is cancelled.

17. The video/audio reproduction apparatus according to claim 15, wherein the control signal is a signal compliant with Consumer Electronics Control (CEC) specifications.

18. The video/audio reproduction apparatus according to claim 14, further comprising an audio input selection part that selects an audio signal from a plurality of audio signals.

19. The video/audio reproduction apparatus according to claim 18, further comprising an audio processing part that performs necessary processing on an audio signal that has been output from the audio input selection part.

20. The video/audio reproduction apparatus according to claim 14, wherein the control part monitors the state of communication with the sound reproduction apparatus, and controls the audio output control part such that the internal speakers are in a muted state when communication is possible, and controls the audio output control part such that the muted state of the internal speakers is cancelled when communication is not possible.

21. The video/audio reproduction apparatus according to claim 14, wherein the communication means is a signal line compliant with High Definition Multimedia Interface (HDMI) specifications.

22. A sound reproduction apparatus that, along with a video/audio reproduction apparatus that reproduces video and audio, constitutes an audiovisual system, and outputs an audio signal selected from a plurality of audio signals to either internal speakers of the video/audio reproduction apparatus or external speakers connected to the sound reproduction apparatus, the sound reproduction apparatus comprising:
an audio output control part that controls audio output of the external speakers using the selected audio signal as input, and
a control part that is capable of bilaterally communicating with the video/audio reproduction apparatus via a communication means, and controls at least the audio output control part,
wherein the control part sends a first control signal based on a power on or off state to the control part of the video/audio reproduction apparatus via the communication means,.

23. The sound reproduction apparatus according to claim 22, wherein when a control signal that instructs power on or off of the sound reproduction apparatus is received from the video/audio reproduction apparatus via the communication means, the control part controls the power on or off based on this control signal.

24. The sound reproduction apparatus according to claim 22, wherein when a third control signal that instructs power on or off of the sound reproduction apparatus is received from a third control part provided in a third apparatus other than the video/audio reproduction apparatus and connected to the audiovisual system via the communication means, the control part controls the power on or off based on this third control signal.

25. The sound reproduction apparatus according to claim 22, wherein the first control signal is a signal compliant with Consumer Electronics Control (CEC) specifications.

26. The sound reproduction apparatus according to claim 22, further comprising an audio input selection part that selects an audio signal from a plurality of audio signals.

27. The sound reproduction apparatus according to claim 26, further comprising an audio processing part that performs necessary processing on an audio signal that has been output from the audio input selection part.

28. The sound reproduction apparatus according to claim 22, wherein the communication means is a signal line compliant with High Definition Multimedia Interface (HDMI) specifications.
